# EUROPEAN PATENT APPLICATION

(11) **EP 2 767 388 A1**
(43) Date of publication of application: **20.08.2014**
(21) Application number: 13155436.2
(22) Date of filing: 15.02.2013
(51) Int. Cl.: B29D 99/00, B29C 70/30, B29L 31/30

(54) **Fibre reinforced plastic profiles having sections with different fibre types**

(71) Applicant: Airbus Operations GmbH, 21129 Hamburg (DE)
(72) Inventor: Werner, Sven, 21614 Buxtehude (DE)
(74) Representative: Isarpatent

(57) **Abstract**

The present invention pertains to a fibre reinforced plastic profile, in particular for an aircraft or spacecraft, comprising a stacked ply assembly including a plurality of stacked plies each comprising fibre material, the ply assembly having a profile cross section comprising at least one first section, at least one second section, and at least one splice section located between the at least one first section and the at least one second section. The splice section includes a first plurality of stacked plies having fibres of a first fibre material and a second plurality of stacked plies having fibres of a second fibre material. In the splice section, respective plies of the first plurality of stacked plies are intertwiningly abutted with respective plies of the second plurality of stacked plies.

## Description

### Field of the invention

The present invention pertains to fibre reinforced plastic (FRP) profiles having sections with different fibre types, in particular for use in manufacturing frame, stringer or cross beam components of aircraft or spacecraft. The invention also pertains to a method of forming a fibre reinforced plastic (FRP) profile having sections with different fibre types.

### Background of the invention

The document US 2012/0308770 A1 discloses a method of manufacturing a composite structural member wherein a stack of fibre reinforced laminate plies with first and second ply portions is laid up, the first and second ply portions containing fibres with different characteristics.

The document EP 1 547 756 A1 discloses a composite material aircraft component with laid up layers of fibre material of a first type and of a second type, the first and second type fibre material forming different sections of the component profile.

Such fibre reinforced plastic profiles with varying lay-ups or hybrid lay-ups may not be suited to cater to the needs of different regions of the profile, especially for structural components serving multiple purposes in the fuselage of an aircraft of spacecraft.

### Summary of the invention

It is therefore one object of the present invention to provide fibre reinforced plastic (FRP) profiles for aircraft or spacecraft components that have varying properties at different sections of the profile cross-section. Another object of the invention is to save weight of an aircraft or spacecraft by obviating the need to use multiple components for the attachment of structural components to other structural elements of the aircraft or spacecraft.

This problem is solved by a fibre reinforced plastic profile having the technical features of claim 1, an aircraft or spacecraft having the technical features of claim 9, and a method for forming a fibre reinforced plastic profile having the technical features of claim 10.

According to a first aspect of the present invention, a fibre reinforced plastic profile, in particular for an aircraft or spacecraft, comprises a stacked ply assembly including a plurality of stacked plies each comprising fibre material, the ply assembly having a profile cross section comprising at least one first section, at least one second section, and at least one splice section located between the at least one first section and the at least one second section. The splice section includes a first plurality of stacked plies having fibres of a first fibre material and a second plurality of stacked plies having fibres of a second fibre material. In the splice section, respective plies of the first plurality of stacked plies are intertwiningly abutted with respective plies of the second plurality of stacked plies.

According to a second aspect of the present invention, an aircraft or spacecraft comprises at least one fibre reinforced plastic profile according to the first aspect of the invention.

According to a third aspect of the present invention, a method for forming a fibre reinforced plastic profile comprises laying up a first plurality of plies having fibres of a first fibre material to a first stacked ply assembly, and laying up a second plurality of plies having fibres of a second fibre material to a second stacked ply assembly. The respective plies of the first plurality of stacked plies are intertwiningly abutted with respective plies of the second plurality of stacked plies, so that the first stacked ply assembly and the second stacked ply assembly form a respective first section and a respective second section of a profile cross section of a fibre reinforced plastic profile.

### Embodiments of the invention

One main idea of the present invention is to form a fibre reinforced plastic profile using a plurality of pre-preg or textile plies, the profile having at least one first section and one second section. The first section and the second section include plies of different fibre material. The first and second sections are spliced together at a splicing section where the plies of different fibre material are intertwiningly bonded. In particular, the different layers of plies abutting each other in the splicing section may be intermeshed in a zig-zag fashion in order to create a stable and uniform bond between the first and second sections.

Such a fibre reinforced plastic profile has the advantage that different fibre properties of the different plies may be adapted to the differing requirements of the profile along the layer plane.

Advantageously, terminal or distal ends of the profile may be optimized for inter-rivet buckling resistance with regard to fibre choice. Carrier sections may be optimized for web buckling resistance or resistance to compression after impact (CAI) or tension after impact (TAI). Finally, other areas like bends or corners may be optimized for reduced probability of unfolding.

Furthermore, an advantage is that the profiles may be optimized for lower costs and lower system weight since areas with less critical requirements may be formed from less expensive and/or lighter fibre materials.

The dependent claims provide additional technical features of advantageous embodiments and further improvements of the invention.

According to an embodiment of the fibre reinforced plastic profile, the fibre reinforced plastic profile may form a stringer, frame or cross beam of an aircraft or spacecraft.

According to a further embodiment of the fibre reinforced plastic profile, the fibre reinforced plastic profile may comprise carbon fibre material or naturally grown fibre material.

According to a further embodiment of the fibre reinforced plastic profile, the fibres of the first fibre material and the fibres of the second fibre material may have different moduli of elasticity.

According to a further embodiment of the fibre reinforced plastic profile, the fibres of the first fibre material and the fibres of the second fibre material may have different mass densities.

According to a further embodiment of the fibre reinforced plastic profile, the fibres of the first fibre material and the fibres of the second fibre material may have different tensile strengths.

According to a further embodiment of the fibre reinforced plastic profile, the fibres of the first fibre material and the fibres of the second fibre material may have different stiffness.

According to a further embodiment of the fibre reinforced plastic profile, the fibre reinforced plastic profile may form an Ω-profile, a Z-profile, an L-profile, an I-profile or a T-profile.

The invention will be explained in greater detail with reference to exemplary embodiments depicted in the drawings as appended.

### Brief description of the drawings

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: shows a schematic illustration of a fibre reinforced plastic profile according to an embodiment of the invention.
- Fig. 2: shows a schematic illustration of a profile cross section of a fibre reinforced plastic profile according to another embodiment of the invention.
- Fig. 3: shows a schematic illustration of a splice section of a fibre reinforced plastic profile according to yet another embodiment of the invention.
- Fig. 4: shows a schematic illustration of a method for forming a fibre reinforced plastic profile according to yet another embodiment of the invention.

### Detailed description of the embodiments

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

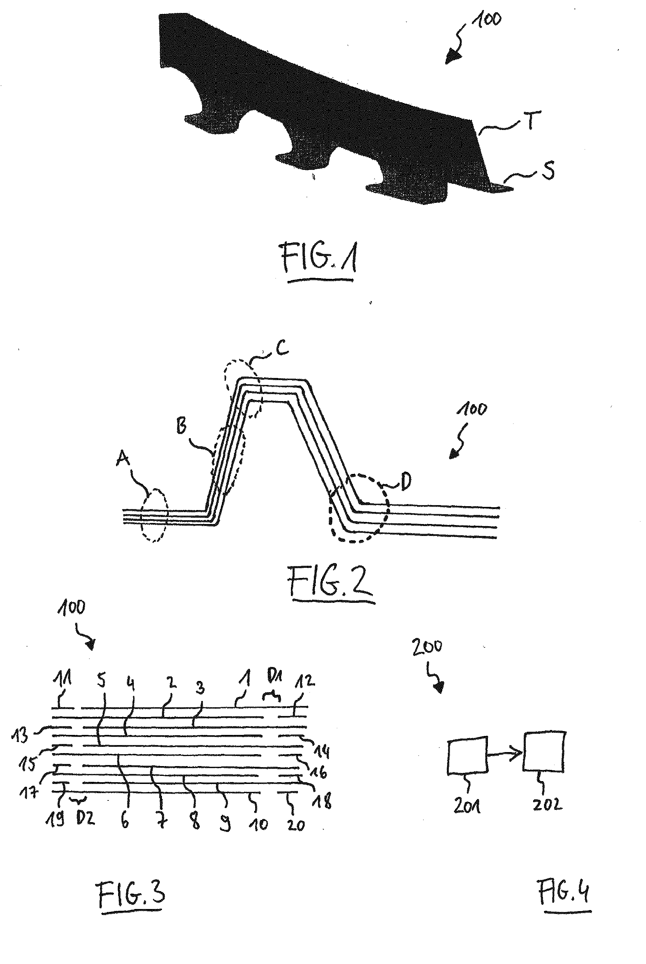

Fig. 1 shows a schematical illustration of a fibre reinforced plastic (FRP) profile 100. The FRP profile 100 is exemplarily shown as Ω-profile, however, other profile types such as L-profiles, I-profiles, H-profiles, T-profiles or Z-profiles are possible for the FRP profile 100 as well. The FRP profile 100 comprises an frame section S and a clip section T. The clip section T mainly has the function of stabilizing the FRP profile 100 and accordingly the structure of the fuselage or wing of the aircraft or spacecraft in which it is used in.

For example, the FRP profile 100 may be a frame for an aircraft, where the beam section T and the clip section S act together to guarantee the structural stability of the fuselage. The section S is used to facilitate attachment of the FRP profile 100 to other structural components of the aircraft such as formers. The main function of the frame is to provide mechanical stability and good load transfer properties. The FRP profile 100 may of course also be used for the manufacture of stringers, longerons, frames, formers, cargo floor components, PAX floor components or cross beams.

Fig. 2 schematically shows the cross section of an FRP profile 100. The cross section may have different regions or sections A, B, C and D corresponding to different areas along the extension of the cross section. For example, the section A at a terminal end of the FRP profile 100 may be a riveting area, which is to be optimized with regard to resistance to inter rivet buckling. The section B may be a vertical carrier section experiencing high loads, so that this section might be optimized with regard to web buckling. The section C may be a transverse carrier section that needs to be optimized with regard to compression after impact (CAI) or tension after impact (TAI). Finally, the section D may be a corner or edge section which might need to be optimized against delamination or unfolding.

The sections A, B, C and D may be formed from stacked ply assemblies of one or more stacked plies. The stacked plies may be chosen so as to have different fibre materials in different sections, according to the respective optimization needs in the sections. The sections A, B, C and D may be joined by respective splice sections at which the different plies of the stacked ply assemblies may be connected.

Fig. 3 schematically illustrates such a splice section of an FRP profile 100. The splice section shows the stacked ply assembly of the FRP profile 100 including a plurality of stacked plies 1 to 20 each comprising fibre material, for example carbon fibre material or naturally grown fibre material.

The splice section may be a joining section between two of the sections A, B, C and D as explained in Fig. 2. For example, on the right side of the splice section, section C may be located, whereas on the left side of the splice section, section D may be located. Accordingly, the splice section includes a first plurality of stacked plies 1, 3, 5, 7, 9 as well as 12, 14, 16, 18, 20 which belong to an end portion of one of the sections A, B, C or D. On the other hand, the splice section includes a second plurality of stacked plies 2, 4, 6, 8, 10 as well as 11, 13, 15, 17, 19 which belong to an end portion of an adjoining one of the sections A, B, C or D.

The first plurality of stacked plies may have in at least some of the stacked plies fibres of a first fibre material. Correspondingly, the second plurality of stacked plies may have in at least some of the stacked plies fibres of a second fibre material. The first and second fibre material may be different from each other, for example with respect to their moduli of elasticity, their mass densities, their tensile strengths, or their stiffness.

Respective plies of the first plurality of stacked plies are intertwiningly abutted with respective plies of the second plurality of stacked plies, i.e. the splice gaps D1 and D2 between each two corresponding layers of plies in the splice section are arranged laterally displaced with regard to each other in an alternating fashion. For example, the splice gap D1 between the layers of plies 2 and 12 is laterally displaced along the extension of the FRP profile 100 against the splice gap D2 between the layers of plies 3 and 13. The following pair of layers 4 and 14 underneath the layers of plies 3 and 13 may then have a splice gap D1 which laterally corresponds to the splice gap D1 between the layers of plies 2 and 12. In that way, the splice gaps D1 and D2 are displaced with regard to the foregoing splice gap in a zig-zag fashion when contemplating a perpendicular cross section through the FRP profile 100.

The number of plies as shown in Fig. 3 is only exemplarily set to 20 and it will be of course possible to use a different number of pairs of plies in the stacked ply assembly. Moreover, the stacked ply assembly may be sandwiching further continuous layers of plies that are not necessarily changing their fibre type in a splice section. Furthermore, it may be possible to provide additional layers of plies above and below the stacked ply assembly.

The plies of the stacked ply assembly may in particular be prepreg plies, i.e. semimanufactured ply layers having unidirectional fibres, a weave of fibres with different fibre directions or a lay-up of multiple fibre weaves. Prepregs as used in this invention may be any duroplastic semimanufactured fabric reinforced by composite fibre material.

Fig. 4 shows a schematical illustration of a method 200 for forming a fibre reinforced plastic profile, especially of a fibre reinforced plastic profile 100 for an aircraft or spacecraft as shown in conjunction with Figs. 1 to 3.

In a first step 201, a first plurality of plies having fibres of a first fibre material are laid up to a first stacked ply assembly. In a second step 202, a second plurality of plies having fibres of a second fibre material are then laid up to a second stacked ply assembly. When laying up the stacked ply assemblies, the respective plies of the first plurality of stacked plies are intertwiningly abutted with respective plies of the second plurality of stacked plies, so that the first stacked ply assembly and the second stacked ply assembly form a respective first section and a respective second section of a profile cross section of a fibre reinforced plastic profile.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively.

### List of Reference Signs

- 1: Ply
- 2: Ply
- 3: Ply
- 4: Ply
- 5: Ply
- 6: Ply
- 7: Ply
- 8: Ply
- 9: Ply
- 10: Ply
- 11: Ply
- 12: Ply
- 13: Ply
- 14: Ply
- 15: Ply
- 16: Ply
- 17: Ply
- 18: Ply
- 19: Ply
- 20: Ply
- 100: Fibre reinforced plastic profile
- 200: Method
- 201: Method step
- 202: Method step
- A: Section
- B: Section
- C: Section
- D: Section
- D1: Splice gap
- D2: Splice gap
- S: Clip section
- T: Beam section

## Claims

1. A fibre reinforced plastic profile (100), in particular for an aircraft or spacecraft, the profile (100) comprising:
a stacked ply assembly including a plurality of stacked plies each comprising fibre material, the ply assembly having a profile cross section comprising at least one first section (A), at least one second section (B; C; D),
and at least one splice section located between the at least one first section (A) and the at least one second section (B; C; D),
wherein the splice section includes a first plurality of stacked plies (1, 3, 5, 7, 9; 12, 14, 16, 18, 20) having fibres of a first fibre material and a second plurality of stacked plies (2, 4, 6, 8, 10; 11, 13, 15, 17, 19) having fibres of a second fibre material, and
wherein respective plies of the first plurality of stacked plies (1, 3, 5, 7, 9; 12, 14, 16, 18, 20) are intertwiningly abutted with respective plies of the second plurality of stacked plies (2, 4, 6, 8, 10; 11, 13, 15, 17, 19).

2. The fibre reinforced plastic profile (100) of claim 1,
wherein the fibre reinforced plastic profile forms a stringer, frame or cross beam of an aircraft or spacecraft.

3. The fibre reinforced plastic profile (100) of one of the claims 1 and 2, wherein the fibre reinforced plastic profile (100) may comprise carbon fibre material or naturally grown fibre material.

4. The fibre reinforced plastic profile (100) of one of the claims 1 to 3, wherein the fibres of the first fibre material and the fibres of the second fibre material have different moduli of elasticity.

5. The fibre reinforced plastic profile (100) of one of the claims 1 to 3, wherein the fibres of the first fibre material and the fibres of the second fibre material have different mass densities.

6. The fibre reinforced plastic profile (100) of one of the claims 1 to 3, wherein the fibres of the first fibre material and the fibres of the second fibre material have different tensile strengths.

7. The fibre reinforced plastic profile (100) of one of the claims 1 to 3, wherein the fibres of the first fibre material and the fibres of the second fibre material have different stiffness.

8. The fibre reinforced plastic profile (100) of one of the claims 1 to 7, wherein the fibre reinforced plastic profile (100) forms an Ω-profile, a Z-profile, an L-profile, an I-profile or a T-profile.

9. An aircraft or spacecraft, comprising:
at least one fibre reinforced plastic profile (100) according to one of the claims 1 to 8.

10. A method (200) for forming a fibre reinforced plastic profile (100), comprising:
laying up (201) a first plurality of plies (1, 3, 5, 7, 9; 12, 14, 16, 18, 20) having fibres of a first fibre material to a first stacked ply assembly; and
laying up (202) a second plurality of plies (2, 4, 6, 8, 10; 11, 13, 15, 17, 19) having fibres of a second fibre material to a second stacked ply assembly,
wherein the respective plies of the first plurality of stacked plies (1, 3, 5, 7, 9; 12, 14, 16, 18, 20) are intertwiningly abutted with respective plies of the second plurality of stacked plies (2, 4, 6, 8, 10; 11, 13, 15, 17, 19), and
wherein the first stacked ply assembly and the second stacked ply assembly form a respective first section (A) and a respective second section (B; C; D) of a profile cross section of a fibre reinforced plastic profile (100).
